# EUROPEAN PATENT APPLICATION

(11) **EP 4 755 822 A1**
(43) Date of publication of application: **10.06.2026**
(21) Application number: 24217496.9
(22) Date of filing: 04.12.2024
(51) Int. Cl.: B65G 1/04, B65G 1/137, B65G 65/00, B25J 9/00

(54) **AN AUTOMATED STORAGE AND RETRIEVAL SYSTEM**

(71) Applicant: AutoStore Technology AS, 5578 Nedre Vats (NO)
(72) Inventor: Fjeldheim, Ivar, 5578 Nedre Vats (NO); Austrheim, Trond, 5578 Nedre Vats (NO)
(74) Representative: Kilburn & Strode LLP

(57) **Abstract**

The disclosure relates to an automated storage and retrieval system comprising a storage grid for housing a plurality of storage containers; a robotic arm arranged to retrieve items stored in storage containers; and a receptable arranged to receive spillages and/or items dropped by the robotic arm

## Description

### TECHNICAL FIELD

The disclosure relates to an automated storage and retrieval system. More particularly, it relates to an automated storage and retrieval system comprising a robotic arm and arrangements for receiving spillages and/or items dropped by the robotic arm.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Some automated storage and retrieval systems incorporate robotic arms for retrieving items stored in storage containers (e.g., to move items between storage containers). However, in such arrangements it can be more difficult to track where items are stored in the storage system when they are handled by the robotic arm, particularly when errors occur.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a side view of an automated storage and retrieval system that is an example of the present disclosure;
Fig. 6 shows a top view of the automated storage and retrieval system of Fig. 5;
Fig. 7 shows an isometric view of the automated storage and retrieval system of Fig. 5;
Fig. 8 shows a front view of the automated storage and retrieval system of Fig. 5;
Fig. 9 is a schematic diagram of a portion of an automated storage and retrieval system that is an example of the present disclosure; and
Fig. 10 is a flowchart showing a method that is an example of the present disclosure.

### DETAILED DESCRIPTION

In overview, the disclosure relates to an automated storage and retrieval system comprising a robotic arm and arrangements for receiving spillages and/or items dropped by the robotic arm.

In a first example, the disclosure provides an automated storage and retrieval system comprising a storage grid for housing a plurality of storage containers, a robotic arm arranged to retrieve items stored in storage containers, and a receptable arranged to receive spillages and/or items dropped by the robotic arm. The receptacle may be any suitable device, arrangement or mechanism which is able to support items or spillages from the robotic arm. For example, the receptable may comprise a board, sheet, net, tray, or any other suitable vessel or holder which can container, catch or support material or items dropped or spilled by the robotic arm. The type of receptacle that is provided may depend on the items that are stored in the system, for example. Providing a receptable in this way ensures that spillages and/or items dropped by the robotic arm do not enter the storage grid, such that operation of the automated storage and retrieval system is not interrupted (e.g., for cleaning or retrieval of spillages or dropped items). Spillages or dropped items may also be more easily tracked and logged in a control system which controls the storage and retrieval system.

In a second example, the disclosure provides an automated storage and retrieval system comprising a storage grid for housing a plurality of storage containers, a robotic arm arranged to retrieve items stored in storage containers, a sensing arrangement configured to detect a spillage and/or an item dropped by the robotic arm, and a control system in communication with the sensing arrangement. The sensing arrangement may comprise any suitable sensing mechanism. For example, the sensing arrangement may comprise a weighing device or a photoelectric sensor (e.g., a photoelectric sensor may be configured to detect when a light beam is broken by an object). Having a sensing arrangement in this manner provides useful information to the control system, for example to enable logging and tracking of spillages and/or dropped items.

In certain examples, the receptacle and the sensing arrangement maybe combined. For example, the sensing arrangement may be operatively coupled to the receptacle (i.e., the sensing arrangement may be arranged to detect when a spillage or dropped item is received by the receptacle).

Optionally, the receptacle may be at least coextensive with a reach area of the robotic arm outside of the storage grid. In some examples, the receptacle may also extend into the storage grid. For example, the receptacle may be at least coextensive with the entire reach area of the robotic arm. The receptacle is thereby able to receive any spillage and/or dropped item within a reach area of the robotic arm (particularly where such spillages and/or dropped items may be outside of a storage container of the automated storage and retrieval system).

Optionally, the automated storage and retrieval system may further comprise a safe walkway arranged to allow a user to access the receptacle. Providing a safe walkway enables a person (e.g., an operator or overseer of the automated storage and retrieval system) to access the receptacle without requiring operation the robotic arm or the automated storage and retrieval system to be paused. For example, the safe walkway may be arranged below (e.g., entirely below, or lower than), the robotic arm. In some examples, the receptacle may be angled towards the safe walkway so that a user is able to easily access items received by the receptacle. For example, angling the receptacle may direct spillages and/or dropped items towards a person so that they do not need to fully, or even partially (dependent on the extent of the receptacle) enter a reach area of the robotic arm, improving safety. When it is stated that the receptacle is 'angled towards the safe walkway' it will be appreciated that a portion of the receptacle that is closer to the walkway may be lower than a portion of the receptacle that is further away from the walkway, or that the receptacle has an open side, or face, which faces generally towards a user on the safe walkway. For example, items received by the receptacle may then slide or move towards the walkway to be collected by a person on the walkway.

Optionally, the robotic arm may be arranged at an edge of the storage grid. For example, in such an arrangement a robotic arm may be arranged to remove items from storage containers within the automated storage and retrieval system (for example, for order picking). In other examples, the robotic arm may be arranged away from an edge of the storage grid. In such an arrangement, the robotic arm may be used to move items between storage containers (e.g., for stock management), for example.

Optionally, the automated storage and retrieval system may comprise a conveyor system at an edge of the grid for conveying storage containers, wherein the robotic arm is arranged to move items between storage containers in the grid and storage containers on the conveyor system. For example, the conveyor system may form part of an order picking arrangement.

Optionally, the robotic arm may be arranged at a top level of the storage grid.

In a third example, the disclosure provides a method of controlling an automated storage and retrieval system comprising a storage grid for housing a plurality of storage containers and a robotic arm arranged to retrieve items stored in storage containers, the method comprising steps of: detecting a spillage and/or an item dropped by the robotic arm; and generating an alert, responsive to detecting the spillage and/or the item dropped by the robotic arm. For example, a spillage and/or dropped item may be detected by a sensing arrangement, or may be detected by a person who inputs information to a control system for further action.

Optionally, detecting the item dropped by the robotic arm may comprise monitoring a sensing arrangement that is independent of the robotic arm. For example, the sensing arrangement may be a sensing arrangement as described above with respect to the first and second examples.

In a fourth example, the disclosure provides a computer-readable medium comprising instructions which, when executed by a processor of a device, cause the device to perform a method as described herein.

The invention includes the combination of the examples and optional features described except where such a combination is clearly impermissible or expressly avoided.

### Automated storage and retrieval system overview

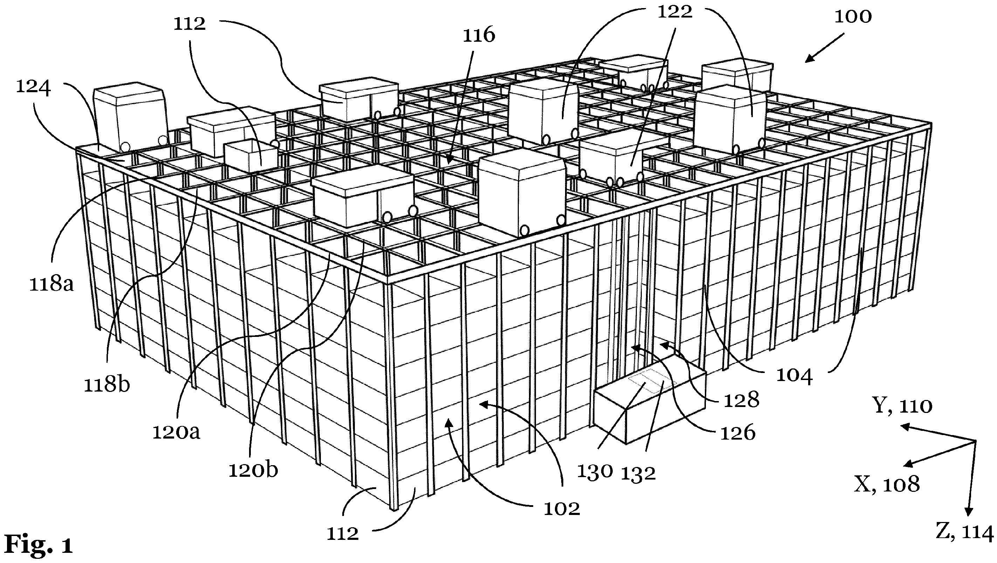

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

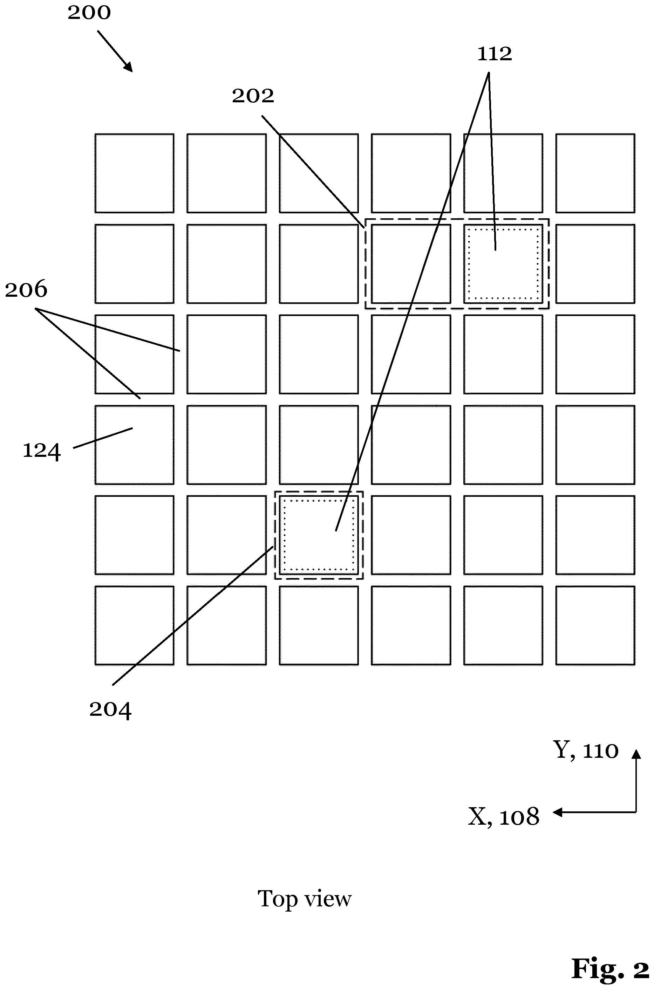

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

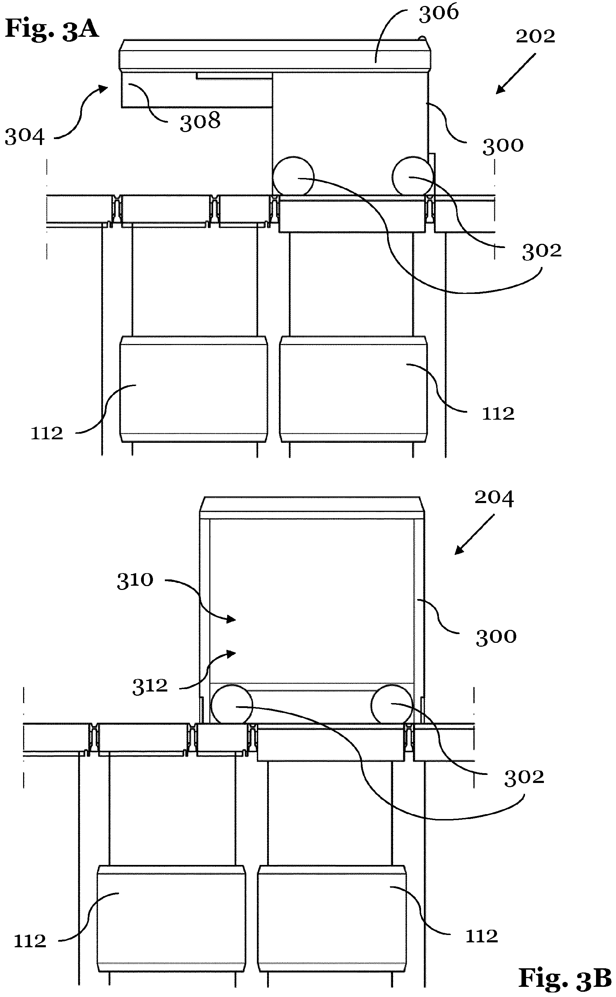

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

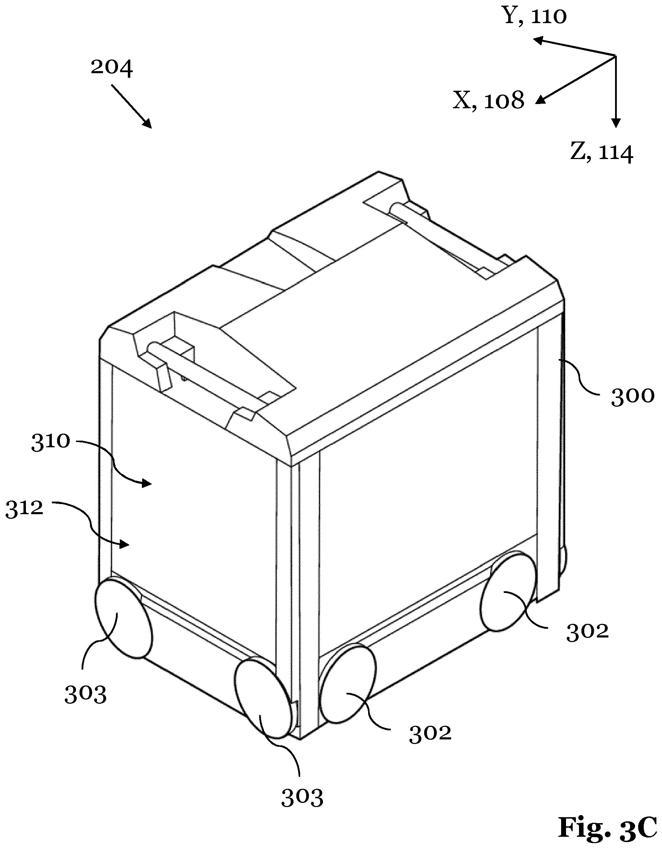

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

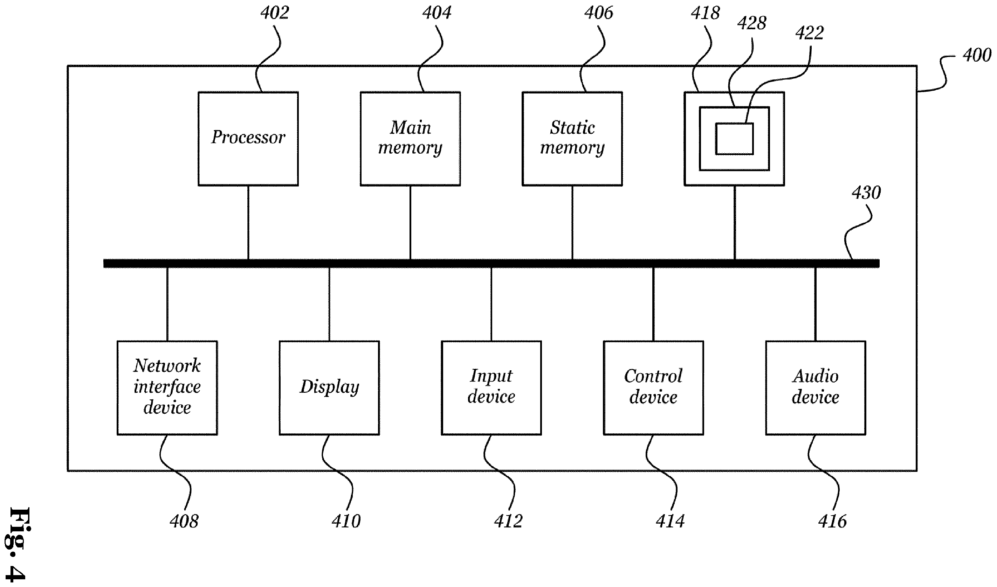

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Receiving and detecting spillages and/or dropped items

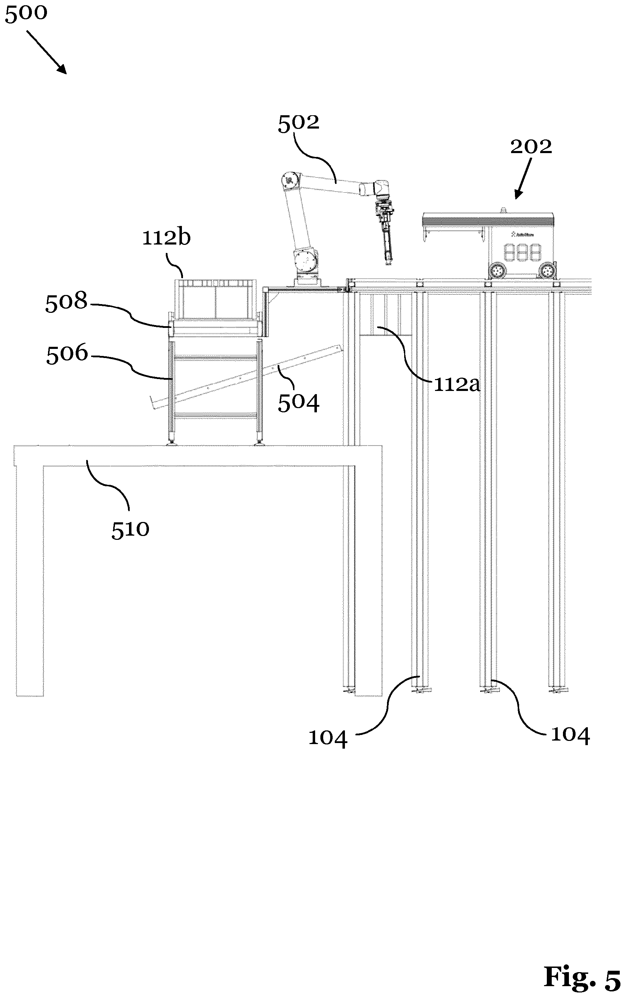

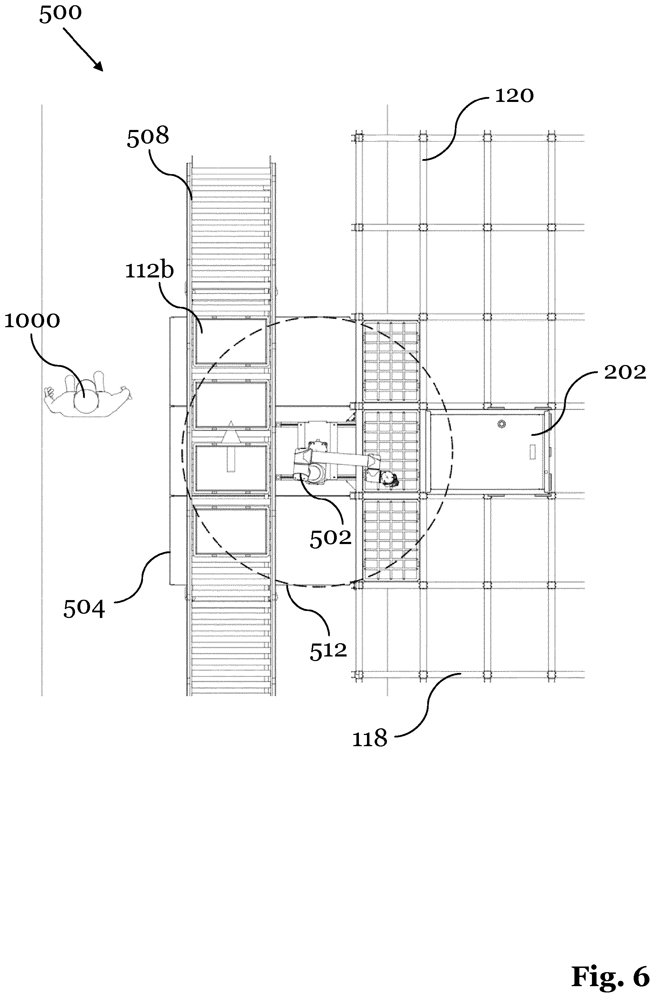

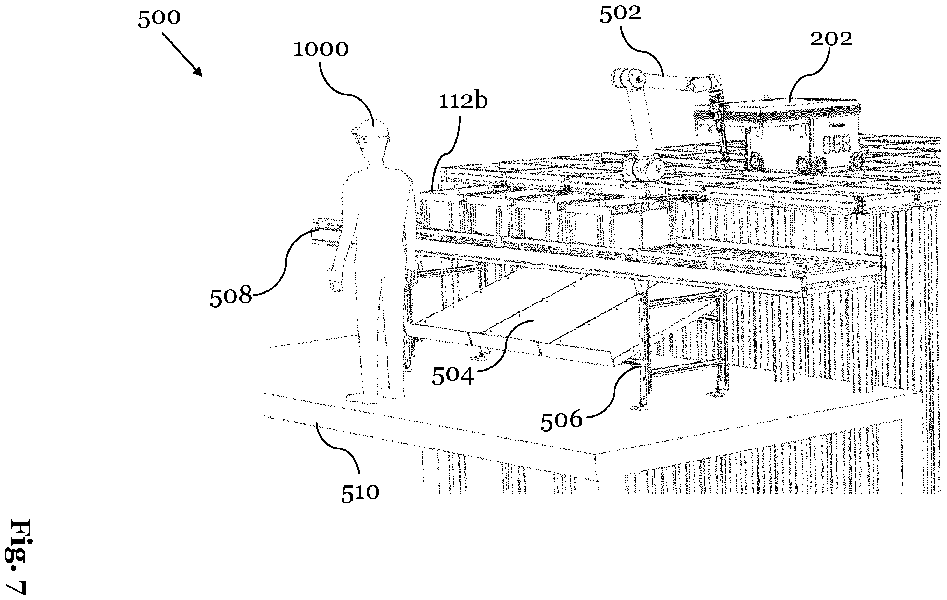

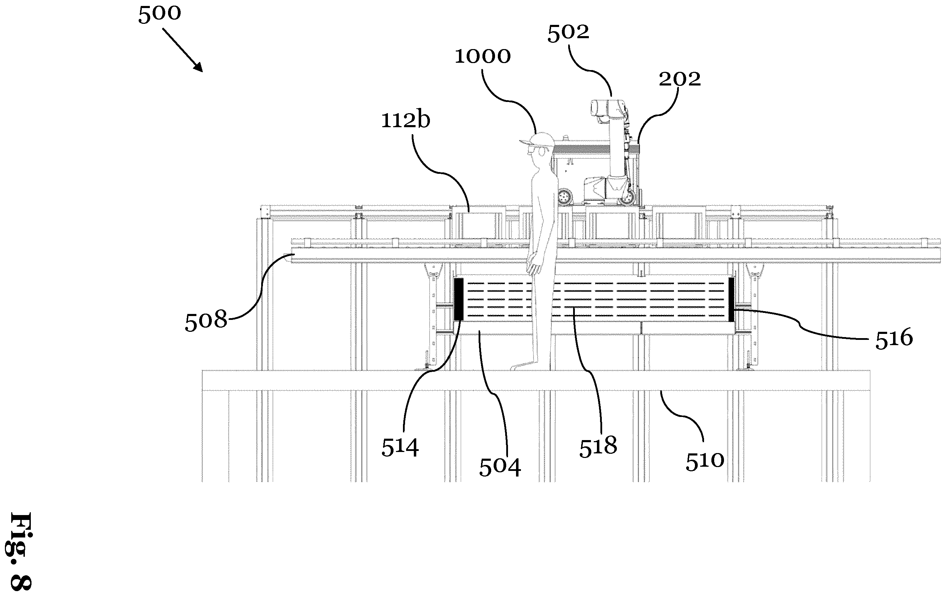

Fig. 5 shows a side view of an automated storage and retrieval system 500 that is an example of the present disclosure. Fig. 6 shows a top view of the automated storage and retrieval system 500, Fig. 7 shows an isometric view of the automated storage and retrieval system 500, and Fig. 8 shows a front view of the automated storage and retrieval system 500. In addition to the components described below, it will be appreciated that the system 500 may additionally comprise any of the components described above with respect to Figs. 1 to 5. In particular, the system 500 comprises a storage grid, which may be a storage grid substantially as described above with respect to Fig. 1.

The system 500 comprises a robotic arm 502 which is arranged to retrieve items stored in storage containers 112. In particular, the robotic arm 502 can move items between storage containers 112a which are located in the storage grid and storage containers 112b which are arranged on a conveyor system 508 at an edge of the grid for conveying the storage containers 112b about a warehouse. To provide this functionality, the robotic arm 502 is arranged at a top level of the storage grid (that is, at the same level as a robot 202 and the rail system on top of the grid), and at an edge of the storage grid. In this example, the conveyor system 508 conveys storage containers 112b parallel to the edge of the grid, but it will be appreciated that a conveyor system 508 may be used to transport storage containers 112b in any suitable manner about a warehouse.

As described above, a robot 202 moves on a rail system in the X-Y plane along rails 118, 120. The robot 202 may thereby convey storage containers 112a in the storage grid to and from a reach area 512 of the robotic arm 502. Although a 'cantilever' type of robot 202 is shown, it will be appreciated an 'internal cavity' type of robot as described above could also be used.

The robotic arm 502 and the conveyor system 508 are mounted to a supporting frame 506. At a level below the conveyor system 508 and the robotic arm 502, a receptable 504 is also mounted to the frame 506. As shown in Fig. 6, the receptacle 504 is at least coextensive with a reach area 512 of the robotic arm 502 outside of the grid, such that the receptacle 504 extends beneath the conveyor system 508 and the robotic arm 502. In this way, any items which are dropped by the robotic arm 502 and not deposited into a storage container will land on the receptacle 504. In this example, the receptacle 504 is a plate or sheet of a material (e.g., metal), such that if there are any spillages (e.g., of liquid, power or other material) arising from a damaged object or item picked up by the robotic arm 502 then this can also be collected by the receptacle 504. Of course, in other examples the receptacle 504 may be provided in any suitable form (e.g., according to what is stored in the storage containers). Providing a receptacle 504 in this way ensures that dropped items and/or spillages are safely received and do not fall into or onto the storage grid where they could interfere with the operation of the system 500 (e.g., by hindering mobility of robots 202 on the rail system, hindering lifting or lowering of storage containers in storage columns, damaging the contents of storage containers etc.). Receiving items and/or spillages by the receptacle 504 also ensures that all of the items can be properly tracked in the system 500. For example, when a dropped item is received by the receptacle 504 it does not enter another storage container.

A safe walkway 510 is arranged adjacent to the conveyor system 508 and receptacle 504. As can be clear appreciated from Fig. 5, for example, the walkway 510 is lower than the robotic arm 502. The walkway 510 is described as safe as a person 1000 on the walkway 510 is out of the reach area 512 of the robotic arm 502 by being below the robotic arm 502 and also being separated from the reach area 512 by the conveyor system 508 and frame 506. In other examples a fence or other barrier may be used to protect the person 1000, either additionally or alternatively. The receptacle 504 is angled towards the safe walkway 510 so that items received by the receptacle 504 slide towards the safe walkway 510 and can be easily picked up by a person 1000. The item can then be identified and logged in a control system to update a database as described above. The receptacle 504 thereby also helps to ensure that the database can be kept up to date in the event of any drops and/or spillages as such events can be more easily logged in a control system and associated database (e.g., manually logged by a person), and tracked.

In order to detect when an item has been dropped or when there has been a spillage, the system 500 comprises a sensing arrangement. In this example, the sensing arrangement comprises a photoelectric sensor in the form of a light curtain comprising a transmitter 514 and a receiver 516. The transmitter 514 generates a plurality of light beams 518 (e.g., infrared light) across a surface of the receptacle 504 to be detected by the receiver 516. When one or more of the beams 518 is broken by an item deposited onto the receptacle 504, the receiver 516 can communicate this to a control system which is in communication with the sensing arrangement (e.g., the control system as described above with respect to Fig. 4). It will be appreciated that any suitable sensing arrangement may be considered. In one particular alternative example, the receptacle 504 may be mounted to the frame 506 via a sensing arrangement which comprises a weighing device configured to weigh the receptacle, such that changes in the measured weight may be detected responsive to a received item and/or spillage.

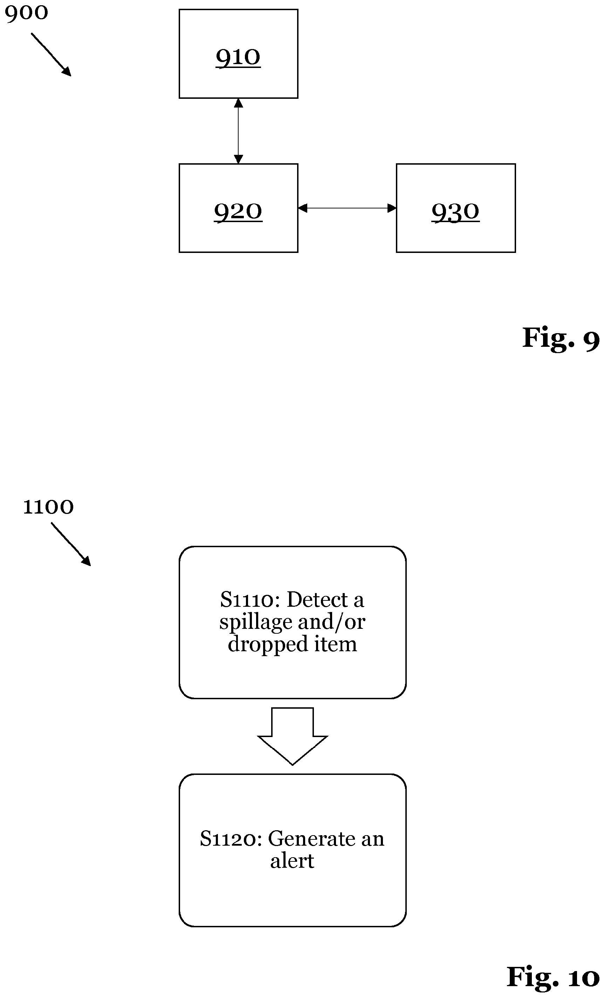

Fig. 9 shows a schematic view of a portion of an automated storage and retrieval system. As shown in Fig. 9, in examples of the invention, a sensing arrangement 920 is configured to detect a spillage and/or an item dropped by a robotic arm by being operatively coupled to a receptacle 910. For example, the sensing arrangement 910 may comprise a photoelectric sensor as described above, or the sensing arrangement 910 may comprise a weighing device. A control system 930 is in communication with the sensing arrangement 920. For example, the control system 930 may be a control system as described above with respect to Fig. 4.

Fig. 10 is a flowchart showing a method 1100 of controlling an automated storage and retrieval system that is an example of the present invention. For example, the method 1100 may be applied to the system 500 described above, for example the method may be performed by a control system as described herein.

In a first step S1110 the method comprises detecting a spillage and/or an item dropped by a robotic arm. For example, detecting the item comprises monitoring a sensing arrangement (e.g., sensing arrangement 910, or the photoelectric sensor described above with respect to Fig. 8).

When a spillage and/or dropped item has been detected, the method moves to a second step S1120 of generating an alert. The alert may be any suitable alert (e.g., visual and/or auditory) to prompt a user (e.g., person 1000) to check the receptacle, allowing dropped items and/or spillages to be quickly resolved and, where necessary, logged in a database of the system for tracking goods.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a storage grid for housing a plurality of storage containers;
a robotic arm arranged to retrieve items stored in storage containers; and
a receptable arranged to receive spillages and/or items dropped by the robotic arm.

2. An automated storage and retrieval system according to claim 1, further comprising:
a sensing arrangement configured to detect a spillage and/or an item dropped by the robotic arm; and
a control system in communication with the sensing arrangement.

3. An automated storage and retrieval system according to claim 2, wherein the sensing arrangement comprises a weighing device and/or a photoelectric sensor.

4. An automated storage and retrieval system according to claim 2 or 3, wherein the sensing arrangement is operatively coupled to the receptacle.

5. An automated storage and retrieval system according to any preceding claim, wherein the receptacle is at least coextensive with a reach area of the robotic arm outside of the storage grid.

6. An automated storage and retrieval system according to any one of claims 1 to5, wherein the automated storage and retrieval system further comprises a safe walkway arranged to allow a user to access the receptacle.

7. An automated storage and retrieval system according to claim 6, wherein the receptable is angled towards the safe walkway so that a user is able to easily access items received by the receptacle.

8. An automated storage and retrieval system according to claim 6 or 7, wherein the safe walkway is arranged below the robotic arm.

9. An automated storage and retrieval system according to any preceding claim, wherein the robotic arm is arranged at an edge of the storage grid.

10. An automated storage and retrieval system according to any preceding claim, further comprising a conveyor system at an edge of the grid for conveying storage containers, wherein the robotic arm is arranged to move items between storage containers in the storage grid and storage containers on the conveyor system.

11. An automated storage and retrieval system according to any preceding claim, wherein the robotic arm is arranged at a top level of the storage grid.

12. A method of controlling an automated storage and retrieval system comprising a storage grid for housing a plurality of storage containers and a robotic arm arranged to retrieve items stored in storage containers, the method comprising steps of:
detecting a spillage and/or an item dropped by the robotic arm; and
generating an alert, responsive to detecting the spillage and/or the item dropped by the robotic arm.

13. A method according to claim 12, wherein detecting the spillage and/or item dropped by the robotic arm comprises monitoring a sensing arrangement that is independent of the robotic arm.

14. A computer-readable medium comprising instructions which, when executed by a processor of a device, cause the device to perform the method of claim 12 or 13.
